Europäisches Patentamt

European Patent Office

Office européen des brevets

(11) Publication number: **0 296 843**

**A2**

(12) **EUROPEAN PATENT APPLICATION**

(21) Application number: 88305715.0

(22) Date of filing: 22.06.88

(51) Int. Cl.⁴: **B60Q 1/04**

(30) Priority: 24.06.87 GB 8714753

(43) Date of publication of application:
28.12.88 Bulletin 88/52

(84) Designated Contracting States:
DE FR GB IT SE

(71) Applicant: **JAGUAR CARS LIMITED**
**Browns Lane**
**Allesley Coventry CV5 9DR West**
**Midlands(GB)**

(72) Inventor: **Helfet, Edsel Keith**
**6 Hawkesworth Drive**
**Kenilworth Warwickshire CV8 2GP(GB)**

(74) Representative: **Cundy, Anthony Brian et al**
**Anthony Cundy & Company 384 Station**
**Road Dorridge**
**Solihull West Midlands B93 8ES(GB)**

(54) Vehicle headlamp installation.

(57) The invention provides a headlamp installation for use in a motor vehicle having a forward body section (11) with downwardly sloping contours. The installation comprises a forwardly directed headlamp (12) mounted in the vehicle at a position just below the body contour and an opening (13) in the body in front of the headlamp to provide clearance for a forwardly directed beam of light from the headlamp. A movable cover (14, 114, 24, 124, 34) for the recess is adapted in a closed position (14B, 114B, 24B, 124B, 34B) to close the opening and to conform to the body contours, and in an open position (14A, 114A, 24A, 124A, 34A) to form a floor for the recess and allow the beam of light to pass above it, and mechanism (10, 15, 16 or 21, 22, 23, 26 or 33, 35, 36, 37, 38) for guiding and moving the cover between its closed and open positions.

# VEHICLE HEADLAMP INSTALLATION

The invention relates to headlamp installations for motor vehicles.

Vehicle designers are continuously striving to produce vehicles with low drag and this in turn tends to lead to cars with smooth, low, sloping bonnet contours. With such designs, it becomes impractical to place headlamps at the front of the car because they would be too low to comply with legislative requirements and would interfere with the smooth lines of the body. There is thus an increasing tendency to mount headlamps further back and to provide some means whereby their interference with the smooth lines of the body is minimised. One known solution is to mount the headlamps in recesses in the body behind transparent windows which are arranged to conform to the body contours. A disadvantage of this arrangement is that the windows tend to scatter some of the light from the headlamp, particularly if the windows become dirty. It is generally impractical to provide for effective cleaning of such a window during use of the vehicle.

It is also known to mount the headlamps in recesses but without windows. This arrangement results in some increase in drag and inhibits attractive styling.

A still further known arrangement is to provide retractable headlamps which when not in use are swung down below the general surface of the vehicle and incorporate a cover which conforms to body contours. The headlamps are then swung up to a position above the body contours when they are used. One disadvantage of such an arrangement is that it is difficult to mount the headlamp in its raised position sufficiently positively to ensure reliable accurate aiming of the headlamp beams. The drag created with the headlamps raised is also a disadvantage. Headlamp flashing facilities are also unsatisfactory because legislation demands that the lamp must be fully raised before it is switched on; by the time the lamp has been raised, the requirement for flashing the headlamp may have passed.

An object of the present invention is to provide a headlamp installation for use in a motor vehicle which overcomes many of the disadvantages of the known systems.

In accordance with the present invention there is provided a headlamp installation for use in a motor vehicle having a forward body section with downwardly sloping contours, the installation comprising a forwardly directed headlamp mounted in the vehicle at a position just below the body contour and an opening in the body in front of the headlamp to provide clearance for a forwardly directed beam of light from the headlamp; characterised by a movable cover for the recess adapted in a closed position to close the opening and to conform to the body contours, and in an open position to form a floor for the recess and allow the beam of light to pass above it, and mechanism for guiding and moving the cover between its closed and open positions.

When the motor vehicle forward body section has outwardly as well as downwardly sloping contours, the mechanism for guiding and moving the cover between its closed and open positions is such as to tilt the rear of the cover downward and also to tilt the cover laterally whereby in its open position it is substantially horizontal and in its closed position it is outwardly tilted in conformity with the body contours.

The mechanism may comprise a pivot arrangement having a transverse axis near the front of the cover and a drive mechanism near the rear of the cover to raise and lower it between its closed and open positions. The pivot axis may be inclined to a transverse direction to cause the cover to tilt laterally as it is moved between its open and closed positions to conform to outwardly inclined body contours.

Alternatively, the cover may be guided by a mechanism comprising two transversely spaced inclined links near the front of the cover arranged to cause the front edge of the cover to be moved forward as it is lowered towards the open position, guide means near the rear of the cover to guide it for generally vertical movement and means for applying power to the mechanism to move it between its open and closed positions. The links may be offset one from the other to provide transverse tilting during raising and lowering of the cover. The effect may be such that the outer link is offset rearwardly of the inner link.

In a further alternative, the mechanism comprises two inclined guides adjacent the forward edge of the cover to cause the forward edge to move forward as it is moved down, further guide means near the rear of the cover to control forward and rearward movement thereof as it is raised and lowered and means for providing power to drive the cover between its open and closed positions.

Embodiments of the invention will now be described by way of example only with reference to the accompanying drawings in which:-

Figure 1 is a side elevation of one form of installation;

Figure 2 is a diagrammatic partial side elevation showing geometric details of a modification of Figure 1 to provide lateral tilt;

Figure 3 is a plan view corresponding to Figure 2;

Figure 4 is a view corresponding to Figure 1 showing an arrangement with a modified mechanism;

Figure 5 is a diagrammatic partial side elevation showing geometric details of a modification of Figure 4 to provide lateral tilt;

Figure 6 is a plan view corresponding to Figure 5; and

Figure 7 is a view corresponding to Figure 1 showing a still further variation.

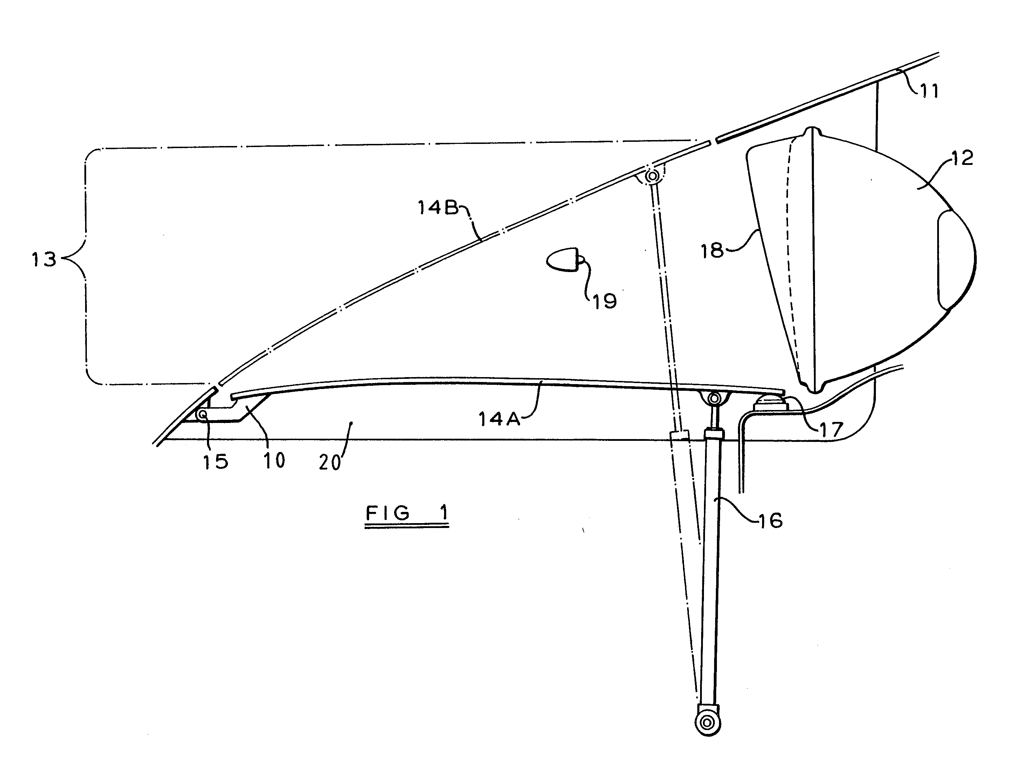

Figure 1 shows the outer panel 11 of a forward body section of a motor vehicle. The section shown is at the forward end of the vehicle. The panel 11 may be part of a movable bonnet (known as a hood in North America) which can be raised to provide access to mechanical components of the car or it may represent a fixed body panel which could be in a position immediately in front of the vehicle front wheels and thus near an outer edge of the vehicle. The part of the body shown represents a forward and downwardly sloping smooth contour to the forward part of the vehicle as is frequently required for styling and aerodynamic purposes.

A forwardly directed headlamp 12 is mounted on the body represented by panel 11 at a position just below the outer surface of the body. The headlamp is arranged to project a beam in a forward direction through an opening 13 in the body panel 11. Due to the slope of the surface of the body, the length of the opening 13 is much greater than the depth of the headlamp and its beam. A movable cover 14 is arranged to be moved between an open position where it is shown in full at 14A and a closed position shown in chain dotted outline at 14B. In position 14B, the cover conforms to the contours of the body represented by panel 11. In position 14A, the cover has been moved down to a position where a beam from the headlamp 12 can be directed out from the body over the cover 14A and through the opening 13. A variety of mechanisms are possible for moving the cover between positions 14A and 14B. Also, there may be some variation in the nature of the movement to conform with the nature of the body itself.

In the example shown in Figure 1, the panel 14 is and remains substantially horizontal in a direction across the vehicle. The mechanism incorporates two parallel arms 10 connected to the forward part of the cover and connected to the vehicle body by two mutually spaced hinges 15. These hinges 15 are directly in line with each other across the vehicle and thus allow direct up and down pivotting of the cover. Pivotting action is controlled by a pneumatic or vacuum or hydraulic cylinder 16 which in the fully open position holds the cover 14 in contact with a locating stop 17. The extended position of the cylinder is set to maintain the panel 14 in register with the body contours when the cylinder is fully extended and thus to define the fully open position.

With the simple pivotting arrangement as shown, the rear edge of the cover 14 swings rearward as it moves down. To conform generally to this movement, the lamp 12 incorporates an inclined lens 18. By this means, the upper part of the lens is brought forward very close to the rearmost lip of body panel 11 at the edge of the recess 13. This provides more attractive styling than with a headlamp set well back in the recess.

The recess also incorporates side panels 20 which extend from the outer panel 11 at the sides of the opening 13 and extend down below the open position 14A for the cover 14. With the cover in this open position, it forms the floor of the recess and, being finished to body panel standards it does form a visually attractive feature.

Preferably the headlamp is of a kind which is relatively wide and low. Such a choice may be necessary in some models to meet legal height requirements, to allow space for other components required in the vehicle and to limit the required length of the cover 14.

With the arrangement shown, it is a simple matter to provide wash or wash and wipe facilities for the front of the headlamp lens. Figure 1 shows a nozzle 19 mounted on the side panel 20 of the recess and itself set back just sufficiently to allow clearance for movement of cover 14. If a wipe facility is provided for the front of the lens 18, this is not readily visible when the cover is closed and should not be subject to accidental damage during daylight operation of the vehicle. To provide clearance between a wiper mechanism and the rear of the cover 14, it may be necessary to position the headlamp 12 a short distance behind the position shown.

With this arrangement, the advantages of a conventional fixed headlamp are maintained. In particular, the lamp can be positively mounted and aimed. Provision can be made simply for a small degree of vertical tilting as required for headlamp levelling in response to changing vehicle attitude under load. The installation also allows for much faster headlamp flashing than is possible with a tilting headlamp. The lamp can be switched on immediately and part of it shows as soon as the cover begins to move. This is much faster than with a tilting headlamp which has to be swung up into position before the lamp can be switched on.

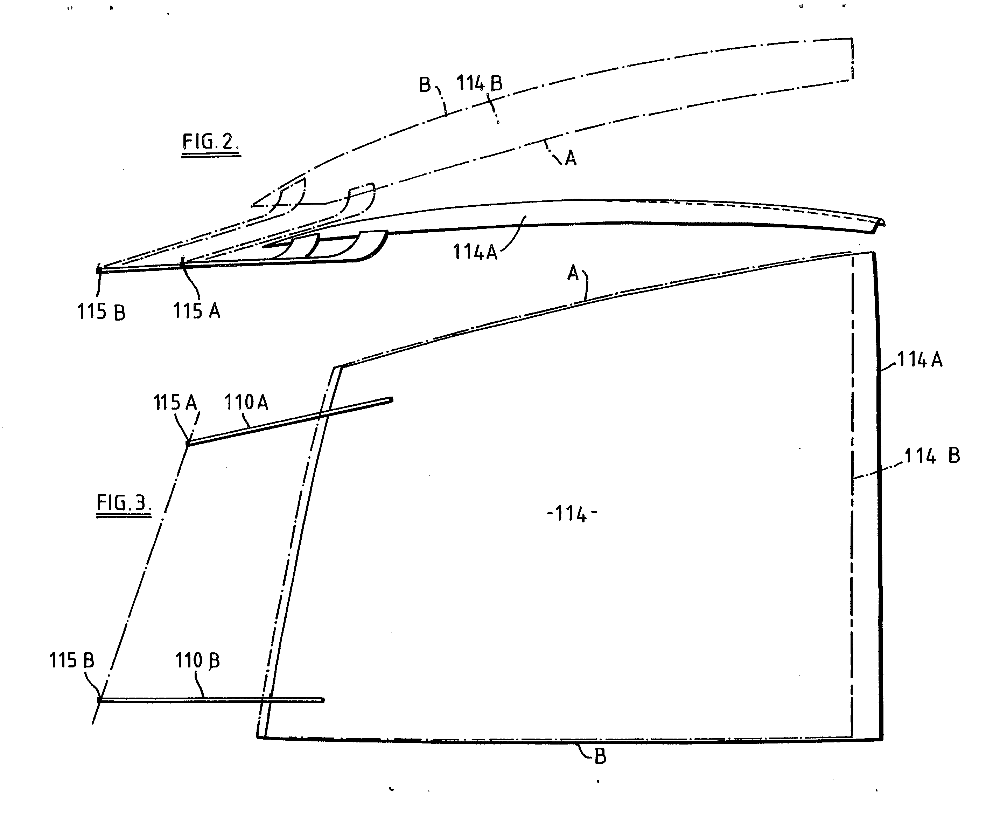

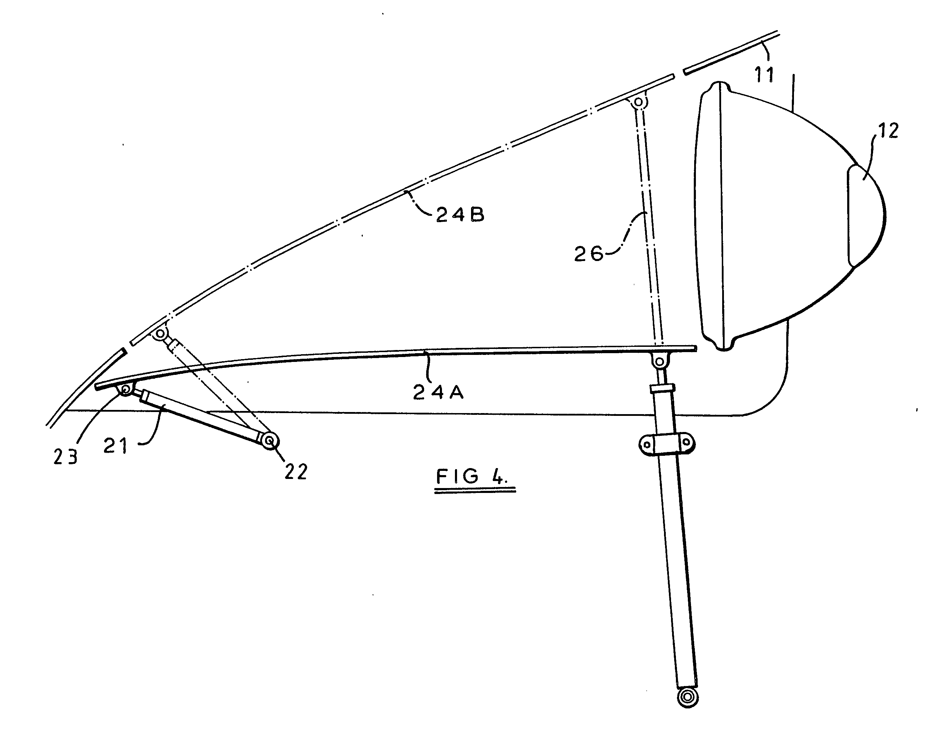

A modification of the Figure 1 arrangement is appropriate if body contours in the region of the opening 13 are inclined laterally, thus requiring lateral inclination of the cover when in position 14B. Despite such inclination, it is desirable that the panel should be generally horizontal when in position 14A. Such lateral tilting can be provided by skewing the hinge axis vertically or horizontally or both vertically and horizontally. Figures 2 and 3 show an appropriate geometrical arrangement. Only the cover 14 and the hinge arrangement are shown to illustrate the geometrical features which provide tilting. Other parts of the installation (apart from the body contour of the vehicle) correspond to Figure 1. Reference numerals used in Figures 2 and 3 correspond to those of Figure 1 but with the prefix 1. The cover 114 is mounted on two forwardly extending arms 110A and 110B. These arms are pivoted respectively at hinges 115A and 115B to the vehicle body. Hinge 115A, towards the outer edge of the vehicle, is set back from hinge 115B as most clearly shown in Figure 3. It is also positioned slightly above the hinge 115B. An effect of the inclination of the pivot axis is that the cover 114 tilts laterally as it is raised and lowered. In the closed (raised) position 114B, the inner edge B of the cover is significantly higher than the outer edge A. This is a requirement in the car in which the installation is used because the body contours are inclined downward in an outward direction as well as in a forward direction. Despite this inclination in the closed position, when the cover is lowered to position 114A, it assumes a substantially horizontal position as for the cover 14A of Figure 1. The cover incorporates a degree of curvature to conform to curvature of the body as best illustrated at position 114A in Figure 2.

Figure 4 shows an installation which is generally similar to that of Figure 1 but has a modified mechanism to control movement of the cover. In this example, a cover 24 moves between open position 24A and closed position 24B. In the open position 24A, the front of the cover has moved forward through a short distance, the rear edge of the cover moving substantially vertically. The rear vertical movement allows a lamp with a vertical lens to be positioned immediately behind the opening without any interference from the closing of the cover.

In order to achieve this movement, the front edge of the cover is supported on two laterally spaced inclined links 21 which extend between pivotal connections 22 on the body and 23 on the cover. The rear of the cover is powered and guided by a strut 26 which may for example be a piston rod sliding in a fixed vertical or near vertical cylinder. Alternatively, the power and the guidance at the rear of the cover may be provided independently of each other.

As with the embodiment of Figure 1, the arrangement of the two mutually spaced pivot links 25 could vary from one to the other to allow for lateral tilting of the cover during movement from a laterally inclined upper position to a generally horizontal lower position.

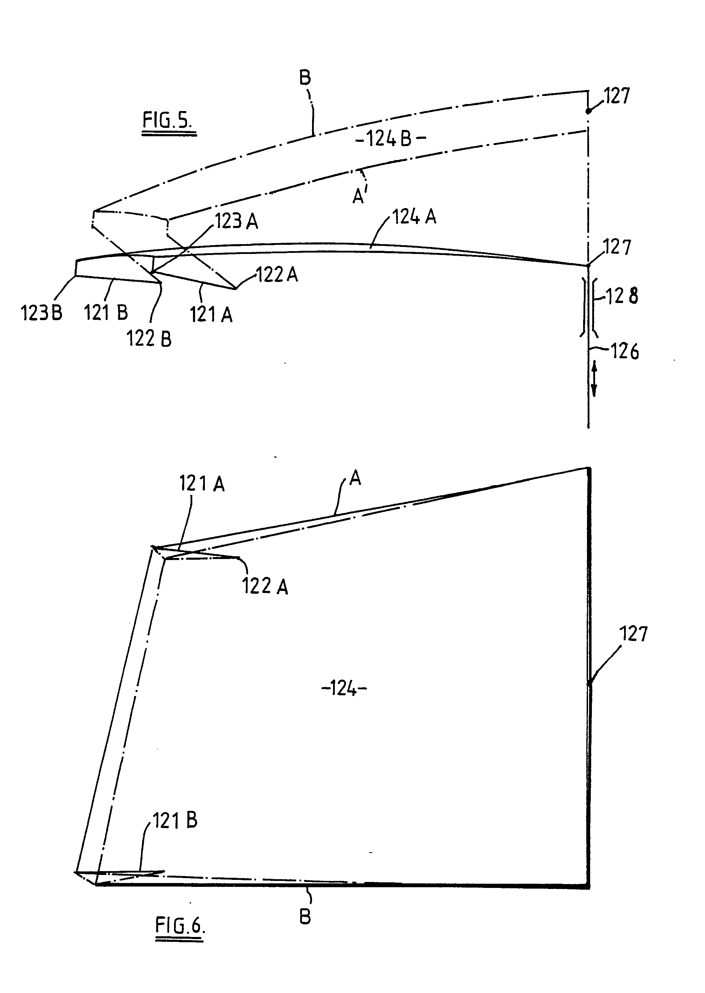

Figures 5 and 6 diagrammatically illustrate a geometrical arrangement for a modification of Figure 4 to produce the same kind of movement of the cover as in Figures 2 and 3. To simplify the geometrical arrangement and an understanding of the invention, the connections for the mechanism to the cover are shown at the edges and corners thereof. In practice, the cover may extend beyond these mounting points as illustrated in Figure 4. At the forward end of the cover 124, it is connected to the vehicle body by fixed length pivotted links 121A and 121B by body hinges 122A, 122B and cover hinges 123A and 123B. The pivot points 123A and 123B are shown offset slightly below the cover 124 to represent the positions of hinges mounted on the underside of the cover. A vertical strut 126 is constrained to move vertically in a fixed guide 128 (for example piston rod 126 in cylinder 128) and is connected by a pivot 127 to the rear edge of the cover 124. Link 121A is offset behind link 121B and is thus closer to the rear mounting point 127. As the rear of the cover is raised and lowered, the asymmetric geometry causes the cover to tilt laterally between an outwardly inclined closed position and a generally horizontal open position as illustrated, outer edge A rising and lowering through a shorter distance than inner edge B.

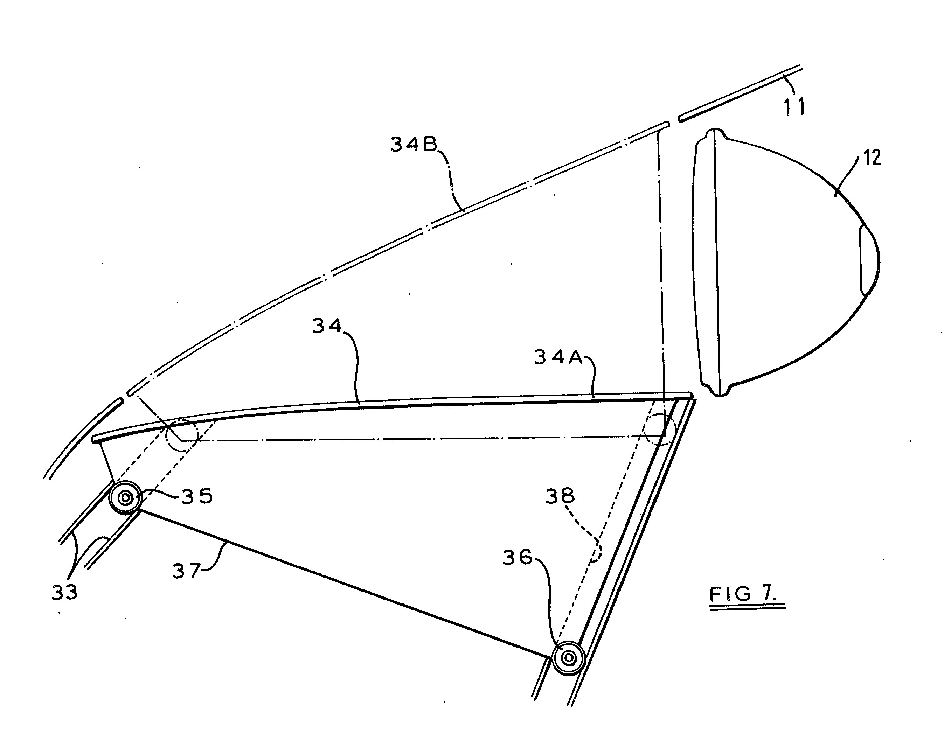

A still further alternative is illustrated in Figure 7. This arrangement provides similar movement to that provided in Figure 2, namely some forward movement of the cover as it is opened. In place of the pivoting links 25 of Figure 2 to achieve forward movement of the front edge of the cover, cover 34 of Figure 3 is guided by two laterally spaced rollers 35 which run in inclined guides 33. The inclination of the guides 33 is such that the forward end of the cover moves forward as it moves down. To ensure that the front of the cover does have to move forward (and thus also downward) during downward movement of the rear of the cover, a single roller 36 carried on a bracket 37 attached to the cover is guided for movement in an inclined guide 38. Any suitable source of power such as hydraulic, pneumatic or electrical power may be employed to raise and lower the rear of the cover 34 and thus in conjunction with the rollers and guides control its movement between positions 34A and 34B as shown.

By varying the inclinations of the two guides 33, the cover 34 can be made to tilt laterally as it moves up and down, as in the other embodiments. Introducing curvature to one or more of the guides allows further variations on movement of the cover.

Although the mechanisms as described above are preferred, any other mechanism which achieves the same or a similar controlled movement of the cover may be employed in its place. The power for this movement may be provided from a hydraulic or pneumatic cylinder as described above, but any other form of power may be employed. Suitable examples include an electrical drive, possibly through a rack and pinion or other mechanical connection and mechanical devices employing memory metal technology.

## Claims

1. A headlamp installation for use in a motor vehicle having a forward body section (11) with downwardly sloping contours, the installation comprising a forwardly directed headlamp (12) mounted in the vehicle at a position just below the body contour and an opening (13) in the body in front of the headlamp to provide clearance for a forwardly directed beam of light from the headlamp; characterised by a movable cover (14, 114, 24, 124, 34) for the recess adapted in a closed position (14B, 114B, 24B, 124B, 34B) to close the opening and to conform to the body contours, and in an open position (14A, 114A, 24A, 124A, 34A) to form a floor for the recess and allow the beam of light to pass above it, and mechanism (10, 15, 16 or 21, 22, 23, 26 or 33, 35, 36, 37, 38) for guiding and moving the cover between its closed and open positions.

2. A headlamp installation as claimed in Claim 1, for use in a motor vehicle having a forward body section having outwardly as well as downwardly sloping contours, characterised in that the mechanism (110A, 110B, 115A, 115B or 121A, 121B, 122A, 122B, 123A, 123B, 126, 127, 128) for guiding and moving the cover between its closed and open positions is such as to tilt the rear of the cover downward and also to tilt the cover laterally whereby in its open position it is substantially horizontal and in its closed position it is outwardly tilted.

3. A headlamp installation as claimed in Claim 1 characterised in that the mechanism comprises a pivot arrangement (15) having a transverse axis near the front of the cover (14) and a drive mechanism (16) near the rear of the cover to raise and lower it between its closed and open positions.

4. A headlamp installation as claimed in Claim 3 characterised in that the pivot axis (115A, 115B) is inclined to a transverse direction to cause the cover (114) to tilt laterally as it is moved between its open and closed positions.

5. A headlamp installation as claimed in Claim 1 wherein the cover is guided by a mechanism comprising two transversely spaced inclined links (21) near the front of the cover arranged to cause the front edge of the cover to be moved forward as it is lowered towards the open position, guide means (26) near the rear of the cover to guide it for generally vertical movement and means (26) for applying power to the mechanism to move it between its open and closed positions.

6. A headlamp installation as claimed in Claim 4 characterised in that the links (115A, 115B) are offset one from the other to provide transverse tilting during raising and lowering of the cover.

7. A headlamp installation as claimed in Claim 6 characterised in that the outer link (115A) is offset rearwardly of the inner link (115B).

8. A headlamp installation as claimed in Claim 1 comprising two inclined guides (33) adjacent the forward edge of the cover to cause the forward edge to move forward as it is moved down, further guide means (36, 38) near the rear of the cover to control forward and rearward movement thereof as it is raised and lowered and means for providing power to drive the cover between its open and closed positions.

FIG 1

EP 0 296 843 A2

FIG. 2.

B 114 B

A

114A

115 B     115 A

FIG. 3.

115 A     110 A

A

114 A

114 B

-114-

115 B     110 B

B

EP 0 296 843 A2

FIG 4.

EP 0 296 843 A2

FIG.5.

B

127

−124 B−

A'

123 A

124 A

127

122 A

128

123 B  121 B  121 A

126

122 B

121 A

A

122 A

127

−124−

121 B

B

FIG.6.

FIG 7.